# EUROPÄISCHE PATENTSCHRIFT

(11) **EP 0 515 585 B1**
(45) Veröffentlichungstag und Bekanntmachung des Hinweises auf die Patenterteilung: **27.12.1995**
(21) Anmeldenummer: 91916974.8
(22) Anmeldetag: 23.09.1991
(51) Int. Cl.: B01J 20/28, B01J 20/22, C12H 1/04

(54) **VERFAHREN ZUR STABILISIERUNG UND/ODER FILTRIERUNG VON GETRÄNKEN**
METHOD FOR STABILIZING AND/OR FILTERING DRINKS
PROCEDE DE STABILISATION ET/OU DE FILTRATION DE BOISSONS

(30) Priorität: 22.12.1990 DE 4041478; 02.08.1991 DE 4125594
(43) Veröffentlichungstag der Anmeldung: 02.12.1992
(73) Patentinhaber: SCHENK-FILTERBAU GESELLSCHAFT MIT BESCHRÄNKTER HAFTUNG, D-73550 Waldstetten (DE)
(72) Erfinder: OECHSLE, Dietmar, D-7070 Schwäbisch Gmünd (DE); BAUR, Wolfgang, D-7076 Waldstetten (DE); GOTTKEHASKAMP, Ludger, D-7071 Göggingen (DE)
(74) Vertreter: Wasmuth, Rolf, Dipl.-Ing.
(86) Internationale Anmeldenummer: EP9101815
(87) Internationale Veröffentlichungsnummer: WO9211085

(56) Entgegenhaltungen:
- EP-A- 0 159 696
- CH-A- 620 133
- DE-A- 1 907 610
- DE-A- 2 648 978
- DE-A- 3 015 439
- FR-A- 2 298 965
- FR-A- 2 520 752
- US-A- 3 172 935

## Beschreibung

Die Erfindung betrifft ein Verfahren zur Stabilisierung und/oder Filtrierung von Getränken unter Verwendung eines körnigen Stabilisier- und/oder Filterhilfsmittels.

Bei der Filtration von Getränken werden zur Abscheidung unerwünschter fester Teilchen Rohstoffe natürlichen Ursprungs wie Kieselguren, Perlite, Zellstoffe, in großem Umfange eingesetzt, weil es bisher in der Praxis nicht gelungen ist, andere Stabilisier- bzw. Filterhilfsmittel, beispielsweise synthetische, herzustellen, die im Vergleich zu den Rohstoffen natürlichen Ursprungs wenigstens annähernd gleichwertige Strömungs-, Filtrations- oder befriedigende Recyclingeigenschaften haben. Die bekannten Filtrationsverfahren haben den Nachteil, daß die genannten Filterhilfsmittel nicht regenerierbar sind, in großen Mengen anfallen und somit eine erhebliche Belastung für die Umwelt bilden, da sie nach ihrem Einsatz auf Deponien gelagert werden müssen.

Es ist bekannt, nach dem Vorklären von Flüssigkeiten, wie Bier, eine Stabilisierung durchzuführen, indem Polyphenole adsorbierende Stabilisierungsmittel wie Polyvinylpolypyrrolidon (PVPP), gegebenenfalls in Kombination mit Eiweißstoffe adsorbierenden Stabilisierungsmitteln, zugegeben werden (PCT WO86/05511).

Es ist aus der DE-A1-36 26 378 ein Verfahren für die Anschwemmfiltration von Getränken, insbesondere von Bier, bekannt, bei welchem ein chemisch regenerierbares Filtermaterial, nämlich pulverförmiges Aluminiumoxid (Al₂O₃₎, und zwar vorherrschend aus α-Al₂O₃-Pulver, als Rohstoff für Schichtenfilter oder Filterschichten verwendet wird. Da diese Stoffe sehr unterschiedliche Dichten haben, lassen sich Filterkuchen mit wenigstens annähernd homogenen Eigenschaften kaum oder nur unzulänglich aufbauen. Ein weiterer Nachteil bekannter Mischungen von schweren und leichten Stoffen besteht darin, daß sich diese bei dynamischen Einwirkungen während des Filterprozesses, beispielsweise durch unvorhergesehene Druckstöße, oder beim Transport leicht entmischen. Bei der bekannten, heute üblichen Anschwemmfiltration ist man darüberhinaus hinsichtlich der Einstellung der Filterhilfsmittel auf das jeweilige Unfiltrat eingeschränkt und es ist in der Praxis wegen der Probleme der Vermischung der Filterhilfsmittel kaum möglich, die erwünschte und notwendige Gleichmäßigkeit der Anschwemmung und damit definierte Filterkuchen nach Kuchenhöhe, Permeabilität usw. zu erreichen.

Aus der DE-A-19 07 610 ist es bekannt, Stabilisier- und Filterhilfsmittel für die Stabilisierung und Filterung von Getränken aus verschiedenen Stoffen als Mischung von körnigen Partikeln unterschiedlicher Korngröße herzustellen, wobei mindestens einer dieser Stoffe aus feinen bis feinsten körnigen Partikeln besteht. Diese Stoffe sollen intensiv gemischt sein. Die Mischung kann zu einer vorgefertigten Filterschicht verarbeitet oder in das Getränk direkt eindosiert und zu einem Filterkuchen angeschwemmt werden.

Es sind auch blockförmige poröse Filter bekannt (US-A-3 172 935), die durch Pressen einer Masse in Formen und anschließendes Aushärten hergestellt werden. Diese Blöcke werden in Kühlsystemen eingesetzt und dienen zum Entfernen von Fremdkörpern, Feuchtigkeit, Schlamm und Säuren.

Der Erfindung liegt die Aufgabe zugrunde, ein Verfahren zur Stabilisierung und/oder Filtrierung von Getränken, insbesondere Bier, Saft, Wein oder dgl., mit körnigen Stabilisier- und/oder Filterhilfsmitteln ausführen zu können, die regenerierbar sind und in einer Mischung feine und feinste Partikel enthalten, ohne daß die Gefahr einer Entmischung besteht.

Die Aufgabe wird gemäß der Erfindung mit den Merkmalen des Patentanspruches 1 gelöst.

Bei dem erfindungsgemäßen Verfahren enthalten die Körner des verwendeten Stabilisier- und/oder Filterhilfsmittels alle Bestandteile der ursprünglichen Mischung und können nach dem Eindosieren in das Getränk beim anschließenden Ausschwemmen einen homogenen Filterkuchen bilden, da eine Entmischung nicht eintreten kann. Die Hilfsmittel sind nach dem Filtrationsprozeß regenerierbar, wobei auch die feinsten Partikel von dem Regeneriermittel nicht angegriffen werden, weil sie in den Körnern gebunden sind, so daß diese Hilfsmittel beliebig oft regeneriert werden können.

Vorteilhaft können für die Mischung organische, körnige Partikel synthetischen Ursprungs verwendet werden. Hierfür geeignet sind beispielsweise PVPP und/oder Kunststoffgranulate, wie PE-Granulat, und/oder modifizierte Zellulose. Die organischen synthetischen Partikel können dabei unterschiedliche Kornfraktionen haben, und zwar vorzugsweise zwischen 0,1 »m bis ca. 10 »m und/oder solche zwischen 10 »m bis ca. 50 »m bzw. solche, die größer als 50 »m sind, wobei diese unterschiedlichen Kornfraktionen auch in bestimmten Fällen vermischt sein können.

Die Agglomeration solcher organischer Partikel synthetischen Ursprungs zur Herstellung von Stabilisierungsmitteln bestimmter Korngröße und Stabilität läßt sich erfindungsgemäß in der Weise durchführen, daß die Partikel derart einer Kompaktierung (vgl. Ullmann, Band 2, S. 313 bis 343) unterworfen werden, daß sie, z.B. in einer Preßschnecke, die dem Kompaktiergerät vorgeschaltet ist, bei Temperaturen in der Nähe des Schmelzpunktes, beispielsweise von 140 bis 260°C für eine bestimmte Dauer, beispielsweise von 10 bis 120 Minuten, vorgepreßt und erhitzt werden. Danach werden die Partikel einer bestimmten Sintertemperatur, die beispielsweise bei 160 bis 170°C liegen kann, und einer darauf abgestimmten Verweilzeit von vorzugsweise 0,1 bis 5 Minuten in den Kompaktierwalzen zu Agglomeraten zusammengesintert. Das so entstandene Agglomerat wird danach mit Mahl- und/oder Sichtaggregaten in eine gewünschte Partikelfraktion überführt. Es lassen sich damit Filterhilfsmittel zur Filtrierung von Getränken wie Bier oder dgl. herstellen, die vorbestimmte homogene Eigenschaften beispielsweise hinsichtlich ihrer Dimensionierung und ihrer Kompaktheit haben und sich im Vergleich zu bekannten Stabilisierungsmitteln nicht entmischen. Da durch das erfindungsgemäße Verfahren die erwähnten organischen Partikel, wie PVPP, zu größeren Partikeln agglomeriert werden können, bietet das Verfahren die Möglichkeit, organische Partikel in feinster Form, beispielsweise als Stäube, die auf dem Markt billig eingekauft werden können, zu qualitativ hochwertigen Stabilisierungsmitteln vorbestimmter Eigenschaften, wie Korngröße, Stabilität usw., zu verarbeiten. Beispielsweise kann feinkörniges PVPP mit einer Korngröße von 0,1 »m bis 50 »m in eine Fraktion der Korngröße von 60 »m bis 120 »m überführt werden, indem das feine PVPP in der Preßschnecke bei einer Temperatur von 165°C 60 Minuten lang erhitzt und gleichzeitig vorgepreßt wird. Danach wird es zwischen den Kompaktierwalzen bei einer Sintertemperatur von ca. 175°C und einem durch die Walzen ausgeübten Preßdruck von ca. 1000 N/cm² innerhalb kurzer Zeit von etwa einer Minute zusammengesintert. Das so entstandene Produkt kann in einem nachgeschalteten Klassiergerät, beispielsweise einem Zyklon oder einem Windsichtgerät, weiterbehandelt werden, indem die agglomerierten Partikel innerhalb des gewünschten Korngrößenspektrums abgetrennt werden. Das bei der Zerkleinerung im Klassiergerät entstandene Feinkorn kann erneuter Kompaktierung bzw. Agglomeration zugeführt werden, während das zu grobe Korn so lange zerkleinert wird, bis die gewünschte Korngrößenverteilung, im angegebenen Beispiel bis zu einer Kornfraktion von 60 bis 120 »m erreicht ist.

Für das erfindungsgemäße Verfahren können die agglomerierten Filterhilfsmittel gezielte, also einem jeweiligen bestimmten Einsatzzweck angepaßte, physikalische und chemische Eigenschaften aufweisen. Erfindungsgemäß werden hierzu in dem ersten Verfahrensschritt feinkörnige organische Partikel synthetischen Ursprungs, beispielsweise feinkörniges PVPP, mit organischen Fasern synthetischen Ursprungs, beispielsweise Polypropylen (PP)- und/oder Polyethylen (PE)-Synthesepulp oder High-Density-Polyethylen (HDPE), High-Density-Polypropylen (HDPP), halogenierte Polyethylene, Polyoxymethylen oder Polyamide, in einer Misch- oder Homogenisiereinrichtung derart vermischt bzw. homogenisiert, daß sich feinste Teilchen der körnigen Partikel, also des Granulats, adhäsiv an die feuchten Oberflächen der Fasern anlegen. Danach wird das Gemisch bei Temperaturen in der Nähe des Schmelzpunktes der bei der niedrigsten Temperaturschmelzenden Komponente, fixiert und nachdem das Benetzungswasser verdampft ist, werden die feinen Teilchen zusammengesintert. Anschließend wird das zusammengesinterte agglomerierte Material wieder in einem Zerkleinerungsgerät, beispielsweise einer Stiftmühle, zerkleinert und ebenfalls über eine nachgeschaltete Klassiereinrichtung (Zyklon, Windsichter oder dgl.) innerhalb des gewünschten Korngrößenspektrums getrennt. Anstelle einer Mischung mit den vorstehend erwähnten organischen Partikeln synthetischen Ursprungs können auch solche natürlichen Ursprungs, beispielsweise Zellstoff- und/oder Stärkepartikel, als feinkörnige Mischkomponente verwendet werden. Ebenso sind anorganische körnige Partikel, beispielsweise Kieselguren, Perlite hochkalzinierte, lauge- und säurebeständige Oxide, wie beispielsweise α-Aluminiumoxid, Zirkondioxid, Titandioxid und/oder Zeolithe oder ähnliche Stoffe geeignet. Denkbar ist auch, daß die beschriebenen Partikel zur Erzielung bestimmter Zusammensetzungen bzw. Eigenschaften gemischt angewandt werden.

In entsprechender Weise kann auch die faserige Komponente synthetischen Ursprungs durch natürliche Fasern ersetzt werden. Geeignet sind hierzu z.B. nahezu lauge- und säurebeständige α-Zellstoffasern, die chlor- oder wasserstoffperoxidgebleicht und naß bzw. trocken konditioniert sind. Vorteilhaft haben diese Fasern ebenso wie die organischen Fasern synthetischen Ursprungs im allgemeinen eine Faserlänge von wenigen Mikrometern bis zu 5000 »m und eine Faserdicke von etwa 0,1 »m bis 50 »m. Anstelle der organischen Fasern synthetischen oder natürlichen Ursprungs können für sich oder in Mischung mit diesen auch anorganische Fasern verwendet werden. Hierfür geeignet sind beispielsweise Glasfasern, Kohlenstoff-Aluminiumoxid oder Metallfasern. Diese Fasern sollten gleichfalls eine Faserlänge von wenigen Mikrometern bis 5000 »m und Faserdicken von etwa 0,1 bis 50 »m haben. Es könnten auch feingemahlene Edelstahlteilchen in Form von Stäuben oder Partikeln beispielsweise in einer Dicke von 0,1 bis 0,5 »m verwendet werden. Besonders geeignet sind beispielsweise hydrophile Thermoplastfibrillen mit einem Wassergehalt von 0 bis 60 %, vorzugsweise zwischen 30 bis 50 %. Dabei empfiehlt es sich, die feinfaserigen Thermoplastfibrillen mit annähernd paralleler Faserlage - also geöffnet - zu verwenden.

Vorteilhaft wird die Erhitzung der Mischung aus feinkörnigem Material und feuchten, hydrophilen thermoplastischen Fibrillen langsam bei ansteigenden Temperaturen durchgeführt, damit der Wasseranteil vollständig verdampft. Die Thermoplastfibrillen selbst können eine Faserlänge von 0,05 bis 5 mm, vorzugsweise zwischen 1 bis 1,5 mm, haben. Es hat sich gezeigt, daß es von Vorteil ist, wenn während des Erhitzungsvorganges die Mischung beispielsweise durch Rühren oder mittels Wirbelbett in Bewegung gehalten wird, wobei die Erhitzungsphase auch in einer inerten Atmosphäre, beispielsweise einer Stickstoffatmosphäre, stattfinden kann.

Mit Hilfe der Temperaturführung, die je nach Schmelzpunkt der Thermoplastkomponente von 100°C bis 270°C betragen kann, und je nach Dauer der Hitzebehandlung unter Berücksichtigung der statischen oder dynamischen Bedingungen (Rühren, Wirbelbett usw.) wird während der Erhitzung sichergestellt, daß die wirksamen Oberflächen der agglomerierten Partikel erhalten bleiben bzw. sehr poröse, filtrationsaktive Strukturen gebildet werden. Die erwähnte feinkörnige, anorganische Granulatkomponente und pulverförmiges α-Aluminiumoxid (α-Al₂O₃) ist zur Anschwemmfiltration von Getränken besonders geeignet. Als feinkörnige Granulatkomponente kann auch fein und trocken gemahlene Zellulose mit einer Dicke zwischen 0,1 bis 0,5 mm und einer Körnung von 0,1 bis 100 »m, bevorzugt zwischen 1 bis 80 »m, verwendet werden. Die Durchführung der Erhitzungsphase in inerter Atmosphäre wird angewandt, wenn eine Oxidation und damit eine unerwünschte Farbänderung während des Sintervorganges vermieden werden soll. Dabei kann das inerte Gas (Stickstoff, Helium oder dgl.) im Kreislauf wieder zurückgewonnen werden.

Durch entsprechende Einstellung des Mischungsverhältnisses der zu agglomerierenden Stoffe bzw. durch entsprechende Steuerung der Temperatur während der Erhitzungsphase lassen sich die zu agglomerierenden Stoffe hinsichtlich ihrer Porosität und ihrer aktiven Oberfläche auf die vorgesehene Einsatzart einstellen, wobei die Oberfläche beispielsweise bei Verwendung von PVPP in ihren Adsorptionseigenschaften erhalten bleibt. Sehr gute Ergebnisse beim Stabilisieren von Getränken können damit erreicht werden.

Die beschriebenen Vorteile erhält man auch durch eine ähnliche Verfahrensweise zur Herstellung der Filterhilfs- und Stabilisiermittel für Getränke. Dabei werden die angegebenen feinkörnigen organischen Partikel synthetischen Ursprungs (z.B. feinkörnig vernetztes PVPP, PE-Granulat, modifizierte Zellulose oder dgl.) mit den genannten organischen Fasern synthetischen Ursprungs (beispielsweise Kunststofffasern aus PE, PP, HDPP, HDPE usw.) nach vorheriger intensiver Mischung einer Kompaktiermaschine zugeführt, wobei die Betriebstemperatur während einer bestimmten Verweilzeit in der Nähe der Schmelztemperatur der bei der niedrigsten Temperaturschmelzenden Komponente gehalten wird und danach das entstandene Agglomerat mit Mahl- und Mischaggregaten in gewünschte Korngrößenfraktionen überführt wird. Auch hier können Partikel, vorzugsweise mit unterschiedlichen Kornfraktionen von 1 »m bis ca. 10 »m oder zwischen 10 »m bis etwa 50 »m bzw. größer als 50 »m verwendet werden. Um z.B. Agglomerate aus feinkörnigem PVPP und PE-Fasern von einer Größe von 30 bis 200 »m, vorzugsweise zwischen 60 bis 120 »m, zu erhalten, werden die beiden Komponenten gemischt bzw. homogenisiert, danach bei einer Temperatur von ca. 125°C etwa 60 Minuten lang in einer Preßschnecke erhitzt und vorgepreßt. Zwischen den Kompaktierwalzen wird auch bei diesem Beispiel zweckmäßig eine Temperatur von etwa 135°C und ein Anpreßwalzendruck von etwa 1000 N/cm² derart aufrechterhalten, daß die Komponenten innerhalb der kurzen Zeit von etwa einer halben Minute zusammensintern. Anschließend wird dann ebenfalls das gesinterte Material zerkleinert und klassiert. Mit diesem Verfahren wird der Bindungsmechanismus zwischen den gewählten Materialien, PVPP und einem PP- und/oder einem PE-Synthesepulp, ausgenutzt.

In weiterer Ausgestaltung des erfindungsgemäßen Verfahrens lassen sich Stabilisier- und/oder Filterhilfsmittel zur Behandlung von Getränken, unter Verwendung feiner organischer und/oder anorganischer körniger Partikel dadurch insbesondere für die Anschwemm- und/oder Kuchenfiltration herstellen, wenn körnige organische Partikel natürlichen oder synthetischen Ursprungs in einem Trockenturm oder als Wirbelsinterschicht mit einem Bindemittel besprüht werden. Als Stoffe kommen auch in diesem Fall beispielsweise Zellstoff-, PE-, PVPP-Partikel usw. in Betracht oder anorganische Partikel, beispielsweise Kieselguren, Perlite, hochkalzinierte Oxide (z.B. α-Al₂O₃, Zirkoniumdioxid), Kohlenstoffpartikel usw. oder Mischungen hiervon oder auch Fasern natürlichen Ursprungs, wie Zellstoffasern bzw. organische Fasern synthetischen Ursprungs (PE, PP, HDPE, HDPP, Polyamide usw.), wie schon beschrieben, ebenso aber auch anorganische Fasern aus Glas (Al₂O₃) oder Metall, beispielsweise Edelstahl, die eine Größenordnung von wenigen Mikrometern bis ca. 5000 »m Länge und eine Dicke von 0,5 »m bis 50 »m haben können. Als Bindemittel können Melaminformaldehyd- oder auch Epichlorhydrin-Harze oder geeignete Thermoplaste dienen. Hierbei werden während des Agglomerationsprozesses die aufgesprühten Bindemittel in den Trockenturm bzw. in die Wirbelschicht gesprüht und bei einer bestimmten Temperatur auf den Partikeln auskondensiert. Die entstandenen gecoateten Partikel werden anschließend einer Fraktionierung mittels Mahlung und Sichtung zugeführt. Die beschichteten agglomerierten Teilchen werden dann in die vorgesehene Korngröße, beispielsweise durch Mahlen, zerkleinert und so einer gewünschten Fraktionierung zugeführt. Die auf diese Weise hergestellten Filterhilfsmittel sind außer zur Anschwemmfiltration besonders für die Kuchenfiltration geeignet, bei der die losen Filterhilfsmittel im Filtrationsgerät vor dem Filtervorgang angeschwemmt werden. Für eine Schichtenfiltration, bei der vorfabrizierte Filterkuchen angewandt werden, ist diese Verfahrensweise nicht vorgesehen.

Die beschriebenen Filterhilfsmittel können nach einem Filtrationszyklus regeneriert und erneut als Filterhilfsmittel bei der Anschwemmfiltration eingesetzt werden. Die Anschwemmfiltration wird beispielsweise bei der Separation von partikulären und kolloidalen Teilchen (Hefen bzw. Trubstoffen) bei Getränken wie Saft, Bier und Wein in Horizontalfiltern, Plattenfiltern, Rahmenfiltern, Kerzenfiltern angewendet. Hierbei wird in bekannter Weise zunächst eine bestimmte Menge des homogenen, in seinen Eigenschaften definierten, erfindungsgemäß hergestellten Filterhilfsmittels in das Unfiltrat oder in Wasser suspendiert (beispielsweise 100 g bis 3000 g/m²) und dann in bekannter Weise auf eine Unterlage, z.B. Filterplatten, vorangeschwemmt. Danach wird dem Unfiltratstrom eine bestimmte Menge, beispielsweise 50 bis 500 g/hl dieser Filtermediumsuspension kontinuierlich so lange zudosiert, bis der Trubraum des Filters erschöpft oder der zulässige Kesseldruck erreicht ist. Nach Beendigung der Filtration wird der Filter leergedrückt, der gebildete Filterkuchen im Filter regeneriert und in ein sogenanntes Vorlage- oder Dosiergefäß zurückgeführt. Dort wird das Filterhilfsmittel unter Zuführung von Wasser resuspendiert und kann erneut für die Anschwemmfiltration eingesetzt werden. Es ist erfindungsgemäß auch möglich, den Filterkuchen im Vorlagegefäß unmittelbar zu regenerieren, wobei die regenerierten und resuspendierten Partikel im Filter für die Freispülung von Regeneriermitteln angeschwemmt werden müssen. Sie werden dann erneut in das Dosiergerät zurückbefördert und danach für eine weitere Anschwemmfiltration eingesetzt.

Der entscheidende Vorteil der Verwendung von Filterhilfs- und Stabilisiermitteln gemäß der Erfindung für die Anschwemmfiltration ist, daß jede mögliche Einstellung in Abhängigkeit vom Unfiltrat und der anzuwendenden Verfahrenstechnik möglich ist, indem das erfindungsgemäße Filterhilfsmittel von vornherein so zusammengestellt, also aufgebaut, werden kann, daß es auf die Bedürfnisse des jeweiligen Unfiltrates ausgerichtet werden kann. Während bei der Anschwemmung mit Kieselgur, also bei der Kieselgurfiltration, Anschwemmungen in Höhe von 25 bis höchstens 40 mm möglich waren, können erfindungsgemäße Hilfsmittel bis zu 60 mm Dicke angeschwemmt werden. Die Erhöhung des Anschwemmfilterkuchens führt gleichzeitig zur Verbesserung der Filterapparaturen, die konstruktiv vereinfacht und kleiner dimensioniert werden können, wobei gleichzeitig erreicht wird, daß die bisherigen Probleme der Vermischung und der ungleichmäßigen Anschwemmung bei herkömmlichen Filtermitteln durch die erfindungsgemäßen Stabilisier- und Filtermittel behoben sind; diese können nunmehr auf die Bedürfnisse des Unfiltrats ausgerichtet werden, indem gezielt bestimmte Filterkuchen mit vorgegebener Permeabilität, Kuchenhöhe usw. herstellbar sind.

Es hat sich gezeigt, daß die nach dem erfindungsgemäßen Verfahren hergestellten Filterhilfsmittel mit Vorteil auch für die Kuchen- und/oder Tiefenfiltration im Getränkebereich verwendet werden können. Bei der Behandlung von Getränken sind sie besonders zur Separation von partikulären und/oder kolloidalen Teilchen geeignet.

So können erfindungsgemäß für die Kuchen- und/oder Tiefenfiltration regenerierbare nach der Erfindung hergestellte Filtermittel eingesetzt werden. Die Regenerierung erfolgt nach einem Filtrationszyklus; die Filtermittel lassen sich nach jeder Regenerierung erneut bei der Kuchen- und/oder Tiefenfiltration einsetzen. Beispielsweise kann dies im Anschluß an die vorbeschriebene Anschwemmfiltration erfolgen, um kolloide und/oder partikuläre Partikel abzuscheiden. Dabei wird in an sich bekannter Weise so verfahren, daß das im Unfiltrat oder im Wasser suspendierte erfindungsgemäße Filtermittel auf Filterelementen bis zu einer gewünschten Filterkuchendicke, beispielsweise von ca. 20 bis 50 bzw. 60 mm, angeschwemmt wird. Je nach der zu filtrierenden Flüssigkeit wird der Filterkuchen sterilisiert und/oder entwässert und damit komprimiert. Es kann dann bis zu einer Druckdifferenz von ca. 4 bar filtriert werden. Nach Beendigung der Filtration wird der Filter leergedrückt, der Filterkuchen im Filter regeneriert und eine weitere Kuchen- und/oder Tiefenfiltration kann sich hieran anschließen.

Nach drei bis sechs Filtrations- und Regenerationszyklen wird der Filterkuchen in ein Dosier- bzw. Vorlagegefäß zurückgeführt, dort resuspendiert und kann dann erneut für eine Kuchen- und/oder Tiefenfiltration verwendet werden. Auch hier kann alternativ der Filterkuchen im Vorlagegefäß regeneriert werden, wobei die regenerierten und resuspendierten Partikel im Filter für die Freispülung von Regeneriermitteln angeschwemmt werden müssen.

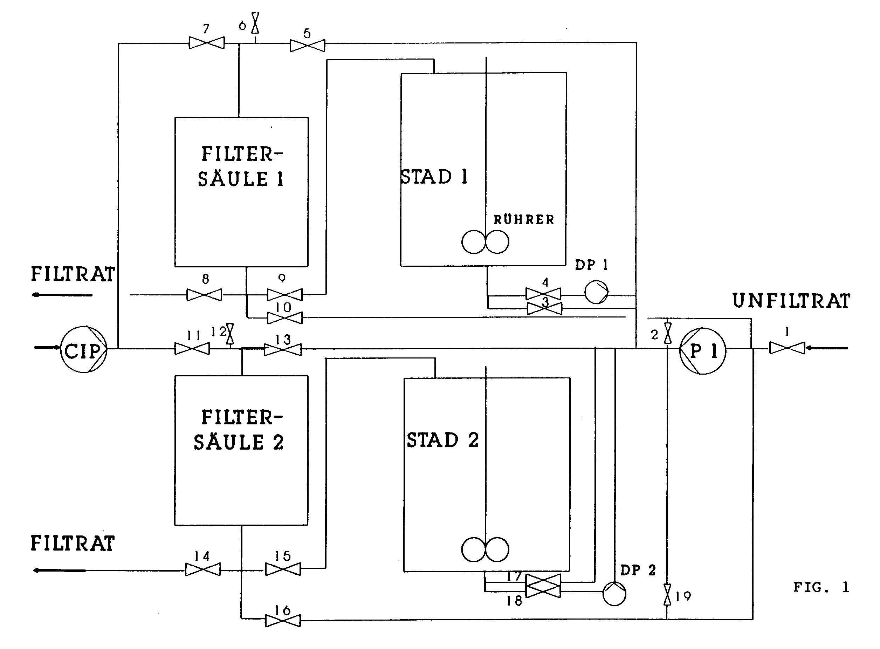

Wie bereits dargelegt, besteht der Nachteil der bekannten Anschwemm- bzw. Filterhilfsmittel, wie insbesondere Kieselgur, Perlite, Zellstoffe, darin, daß es nicht möglich war, diese Filterteilchen durchgehend homogen und in einer dem jeweiligen Unfiltrat angepaßten Teilchengröße einzusetzen, so daß ein Konglomerat zufällig vermischter und gestalteter Filterteilchen zur Filterung zur Verfügung stand. Die erfindungsgemäße Verfahrenstechnik ermöglicht es nunmehr, sozusagen genau vorkonstruierte Filterteilchen herzustellen, die nicht nur höhere Anschwemmungen auf Filterelementen in üblichen Filterkesseln erlauben, sondern auch neue Anwendungstechniken bei der Stabilisierung von Getränken, wie Bier, Saft, Wein oder dgl., ermöglichen. Bei einer solchen werden erfindungsgemäß die Stabilisier- bzw. Filterhilfsmittel, beispielsweise PVPP-Partikel, in einer Filtersäule unter Zudosierung im Unfiltratstrom angeschwemmt und der angeschwemmte Filterkuchen in Säulenform regeneriert und anschließend in einer Dosiervorrichtung, beispielsweise einem Dosiergefäß, ausgetragen. Danach kann das angeschwemmte Material zur Resuspension derart verwendet werden, daß die PVPP-Partikel erneut in einer Säule angeschwemmt werden. Dies kann mit Vorteil in der Weise geschehen, daß mindestens zwei Filtersäulen kontinuierlich betrieben werden, indem in der einen Säule gefiltert bzw. stabilisiert und in der anderen Säule gleichzeitig regeneriert wird. In Fig. 1 ist an einem Schema die PVPP-Stabilisierung in einer Filtersäule dargestellt.

Vor Stabilisierungsbeginn werden die Stapeltanks STAD 1 und STAD 2 zum Ansetzen der etwa 10 gew.-%igen PVPP-Suspensionen mit Wasser und PVPP, das nach einem der obigen Agglomerationsverfahren hergestellt ist, gefüllt. Das Wasser wird über die Ventile 1, 3, 18 mit der Speisepumpe P1 in die Tanks gepumpt; das PVPP wird beim ersten Ansatz manuell durch Mannlöcher in den Tankdeckeln zugegeben. Die Rührer in den STAD 1 und STAD 2 halten die Suspension homogen.

Nach der Sterilisierung der Anlage wird die Filtersäule 1 mit Kohlendioxid über Ventil 6 vorgespannt und mit Unfiltrat über die Ventile 1, 2, 10 gefüllt. Ventil 6 wird beim Auffüllen zur Entlüftung geöffnet.

Bei der Voranschwemmung wird mit der Pumpe DP1 PVPP-Suspension in den Kreislauf, der bei Schaltung der Ventile 5, 10, 4 geöffnet ist, zudosiert.

Hiernach wird auf Stabilisierung umgestellt, wobei mit DP1 PVPP-Suspension in den von P1 geförderten Unfiltratstrom bei Schaltung der Ventile 1, 4, 5, 8 dosiert wird.

Bei kontinuierlicher Verfahrensweise der Anlage wird nach Erschöpfung der Filtersäule 1 der Unfiltratstrom zur Stabilisierung auf Filtersäule 2 umgelenkt, die bei der vorangegangenen Regeneration für eine Stabilisierung vorbereitet wurde. Die Regeneration von Filtersäule 1 verläuft parallel zur Stabilisierung in Filtersäule 2.

Das zu stabilisierende Getränk wird mit Inertgas über Ventil 6 durch die Filtersäule über Ventil 8 in einen in der Zeichnung nicht dargestellten Puffertank gedrückt. Mit der CIP-Pumpe (CIP = clean in place, also mit automatischer Reinigung im installierten Zustand) und den angesteuerten Ventilen 7 und 8 wird nun die Filtersäule 1 mit Heißwasser (T > 80°C) gefüllt. Dieses Wasser wird mit heißer ca. 1 %-iger Natronlauge (T > 80°C) in den Abwasser-Kanal verdrängt; es schließen sich Heiß- und Kaltwasserspülungen sowie eine Säurespülung an. Mit Inertgas wird das PVPP über das Austragventil 9 in den Stapeltank (STAD 1) zurückbefördert. Hierauf schließt sich eine Voranschwemmung wie vorstehend beschrieben an.

Ist die Filtersäule 2 erschöpft, wird der Unfiltratstrom zur Stabilisierung zur Filtersäule 1 umgelenkt und parallel zur Stabilisierung wird Filtersäule 2 regeneriert.

Mit dieser Verfahrensweise lassen sich Filtersäulen bis zu einer Höhe von 1,5 m und einem Durchmesser bis zu 1,5 m anschwemmen. Solche Filterkuchen, beispielsweise aus PVPP, sind regenerierbar und lassen sich danach in Dosiergefäße austragen, wo sie resuspendierbar sind und nach ihrer Regeneration erneut in einer Säule angeschwemmt werden können. Wie Fig. 1 zeigt, läßt sich dieses Verfahren besonders wirtschaftlich einsetzen, wenn mindestens zwei Säulen kontinuierlich betrieben werden, indem mit einer Säule gefiltert und mit der anderen gleichzeitig regeneriert wird.

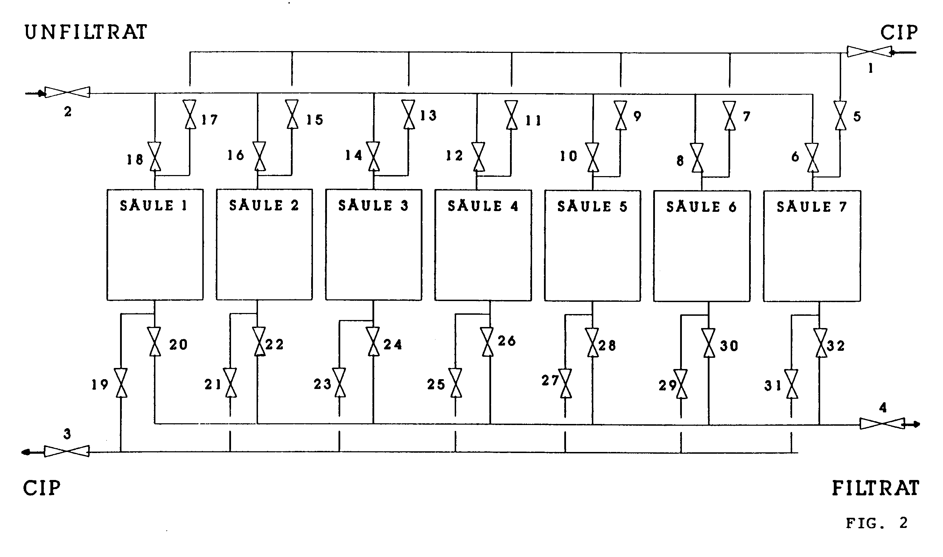

Eine weitere erfindungsgemäße Verfahrenstechnik zur Stabilisierung von Getränken, insbesondere von Bier, Saft, Wein, unter Verwendung von Stabilisier- und/oder Filterhilfsmitteln, die nach den beschriebenen erfindungsgemäßen Verfahren hergestellt sind, läßt sich unter Anwendung von Anschwemmsäulen erfindungsgemäß dadurch erreichen, daß die Stabilisierungs- und/oder Filterhilfsmittel in mehr als drei Filtersäulen, und zwar bis zu hundert Filtersäulen in der Weise vorgelegt werden, daß eine bestimmte Menge des Unfiltrats so lange durch eine der Säulen geleitet wird, bis diese zu etwa 80 % ihres Adsorptionsvermögens erschöpft ist. Danach wird der Unfiltratstrom in eine andere Regeneriersäule eingeleitet, bis deren Adsorptionsvermögen ebenfalls zu etwa 80 % erschöpft ist, wobei in dieser Weise kontinuierlich nach und nach alle vorhandenen, noch nicht erschöpften, also regenerierten, Säulen zugeschaltet werden, während parallel hierzu die bereits erschöpften Säulen ebenfalls kontinuierlich nacheinander wieder regeneriert werden. Eine schematische Darstellung der PVPP-Stabilisierung im statischen Säulenverfahren zeigt Fig. 2.

In den Säulen 1 bis 7 ist jeweils eine bestimmte, dem Volumen der Säule angepaßte PVPP-Menge als Suspension oder in trockener Form vorgelegt, die nach einem der obigen Agglomerationsverfahren hergestellt ist.

Während der kontinuierlichen Fahrweise sind mehrere Säulen der Stabilisierung und mehrere Säulen der Regeneration zugeschaltet.

Der Unfiltratstrom wird zum Beispiel durch die Säulen 1 bis 3 geleitet und verläßt diese stabilisiert, wenn die Ventile 2, 18, 16, 14, 20, 22, 24, 4 angesteuert werden.

Bei etwa 80 %-iger Erschöpfung der Säule 1 wird Säule 4 durch Schaltung der Ventile 12 und 16 in die Stabilisierungsphase aufgenommen. Säule 1 wird bei 100 %-iger Erschöpfung durch Schließen der Ventile 18 und 20 der Regeneration zugewiesen. Ist Säule 2 etwa 80 %-ig erschöpft, wird Säule 5 durch Schaltung der Ventile 10 und 28 in die Stabilisierungsphase aufgenommen; Säule 2 wird bei 100 %-iger Erschöpfung durch Schließen der Ventile 16 und 22 der Regeneration zugewiesen.

Auf diese Weise werden sämtliche Säulen sukzessive in die Stabilisierungs- oder Regenerationsphase geführt.

Die Regeneration beginnt bei Säule 1 zum Beispiel, wenn die Ventile 18 und 20 geschlossen wurden. Das in der Säule verbliebene Unfiltrat wird entweder mit Inertgas in einen Puffertank gedrückt oder mit Wasser verdrängt.

Hieran schließt sich eine Heißwasser-, Natronlauge-, Heißwasser-, Säure- und Kaltwasserspülung über eine CIP an, wenn die Ventile 17 und 18 angesteuert werden.

Der Vorteil dieses Mehrfachsäulenverfahrens gegenüber dem vorbeschriebenen besteht unter anderem in der vereinfachten Apparatur, weil im Vergleich zur Ausführung nach Fig. 1 Dosierpumpen und Dosiergefäße entfallen und durch die Umschaltung der einzelnen Säulen eine schnelle und wirtschaftliche Filtration erzielt werden kann.

Über die beschriebenen Verfahren hinaus kann mit den erfindungsgemäßen Agglomerations- und Filterhilfsmitteln auch eine kombinierte Stabilisierung und Filtration von Getränken, wie Bier, Saft, Wein, durchgeführt werden. Hierzu können die Getränke mit einer Kombination von Filterhilfsmitteln aus Zweistoffkomponenten und mit PVPP-Partikeln stabilisiert und filtriert werden, wobei Filterhilfsmittel und PVPP-Partikel dem Unfiltratstrom kontinuierlich zudosiert werden, so daß ein Filterkuchen entsteht, der hervorragende Stabilisier- und Filtrationseigenschaften aufweist und der nach Beendigung dieser kombinierten Filtration/Stabilisierung im Filter regeneriert und dann zur erneuten Kombination Filtration/Stabilisierung eingesetzt werden kann.

Bei der Kombination Filtration/Stabilisierung besteht der Vorteil darin, daß mit einem Hilfsmittel, das gleichzeitig filtrierende und stabilisierende Eigenschaften hat, und mit einer konstruktiv einfachen Filterausführung in einem Schritt filtrationstechnisch gesehen zum Beispiel Trubstoffe abgeschieden und stabilisierungstechnisch gesehen zum Beispiel Gerbstoffe abgetrennt werden können.

Zusammenfassend ist festzuhalten, daß mit der Erfindung Stoffe wie beispielsweise PVPP, die in Form feinster Partikel vorliegen und darum nicht regenerierbar sind, in umweltfreundliche, billige regenerierbare Filterhilfs- bzw. Stabilisierungsmittel, insbesondere auch aus unterschiedlichen Ausgangsstoffen, umgewandelt werden können. Beispielsweise läßt sich auch ein aluminiumfreies Anschwemm-Filterhilfsmittel herstellen, das dort eingesetzt werden kann, wo Aluminium als Anschwemmfilterhilfsmittel unerwünscht ist. Erfindungsgemäß hergestellte Hilfsmittel führen zu einer wesentlichen verfahrenstechnischen Verbesserung bei der Anschwemmfiltration, insbesondere bei der Stabilisierung von Getränken zur Vermeidung von Trübungen. Äußerst vorteilhaft ist, daß sich spezifisch schwere Teilchen und spezifisch leichtere Teilchen im Filtermaterial nicht mehr entmischen, wie dies beispielsweise bei Komponenten aus Aluminium und Polyethylen bisher der Fall war. Die einheitliche Mischdichte und Homogenität gewährleisten den Einsatz auf fast allen Gebieten, insbesondere aber bei Verwendung als regenerierbares Filtermaterial zum Beispiel bei der Anschwemmfiltration. Schließlich ist die Möglichkeit gegeben, durch entsprechende Zusammensetzung der Komponenten, Steuerung der Verfahrensschritte, insbesondere des Erhitzungsvorganges, der Agglomerisation, Filterhilfsmittel vorgegebener Formgröße und Permeabilität zu erzeugen, die sich bei Schüttung durch günstige Druckverhältnisse der zu filternden oder zu stabilisierenden Medien und ihre große Homogenität auszeichnen.

## Patentansprüche

1. Verfahren zur Stabilisierung und/oder Filtrierung von Getränken, insbesondere Bier, Saft, Wein oder dgl., unter Verwendung eines körnigen Stabilisier- und/oder Filterhilfsmittels, bei dem die Körner aus einer Mischung verschiedener Stoffe bestehen, von denen mindestens einer die Form von feinen bis feinsten körnigen Partikeln aufweist, wobei die Korngröße der Stabilisier- und/oder Filterhilfsmittel nach Maßgabe des Verwendungszweckes durch Sichtung oder Zerkleinerung einer Masse bestimmt ist, die durch Zusammenpressen, Erhitzen und Agglomeration der Mischung und eines in ihr enthaltenen schmelzbaren Stoffes sowie anschließendes Fixieren nach Art einer Sinterung erzeugt wurde.

2. Verfahren nach Anspruch 1,
dadurch gekennzeichnet, daß die Mischung zur Herstellung der körnigen Getränke-Stabilisierungsmittel organische körnige Partikel synthetischen Ursprungs, beispielsweise Polyvinylpolypyrrolidon (PVPP) und/oder Kunststoffgranulate, beispielsweise Polyethylengranulat und/oder modifizierte Zellulose enthält.

3. Verfahren nach Anspruch 2,
dadurch gekennzeichnet, daß die organischen synthetischen Partikel in der Mischung unterschiedliche Kornfraktionen haben, vorzugsweise zwischen 0,1 »m bis ca. 10 »m und zwischen 10 »m bis 50 »m und/oder größer als 50 »m.

4. Verfahren nach einem der Ansprüche 1 bis 3,
bei dem in einer vorangehenden Verfahrensstufe die Partikel in einer einem Kompaktiergerät vorgeschalteten Preßschnecke bei Temperaturen in der Nähe des Schmelzpunktes, beispielsweise von 140 bis 260°C für eine Dauer von 10 bis 120 Minuten vorgepreßt werden und danach bei einer bestimmten Sintertemperatur von beispielsweise 160 bis 170°C und einer darauf abgestimmten Verweilzeit von vorzugsweise 0,1 bis 5 Minuten agglomeriert und gesintert werden.

5. Verfahren nach Anspruch 1,
bei dem in einer vorangehenden Verfahrensstufe feinkörnige organische Partikel natürlichen Ursprungs, wie Zellstoff- oder Stärkepartikel, und/oder Partikel synthetischen Ursprungs, beispielsweise feinkörniges PVPP, mit organischen Fasern synthetischen Ursprungs, beispielsweise Polypropylen (PP) und/oder Polyethylen (PE)-Synthesepulp oder High-Density-Polyethylen (HDPE), High-Density-Polypropylen (HDPP), halogenierte Polyethylene, Polyoxymethylen oder Polyamide, in einer Misch- oder Homogenisiereinrichtung derart vermischt bzw. homogenisiert werden, daß sich feinste Teilchen der körnigen Partikel adhäsiv an die feuchten Oberflächen der Fasern anlegen und danach bei Temperaturen in der Nähe des Schmelzpunktes des schmelzbaren Stoffes fixiert und nach Verdampfung des Benetzungswassers die feinen Teilchen zusammengesintert und anschließend in die gewünschten Korngrößen zerkleinert werden.

6. Verfahren nach Anspruch 5,
dadurch gekennzeichnet, daß anstelle oder in Mischung mit den organischen Partikeln synthetischen Ursprungs organische Partikel wie Kieselguren, Perlite, hochkalzinierte, lauge- und säurebeständige Oxide, beispielsweise α-Aluminiumoxid, Zirkoniumdioxid, Titandioxid und/oder Kohlenstoffpartikel, Zeolithe oder dgl., verwendet werden.

7. Verfahren nach Anspruch 5,
dadurch gekennzeichnet, daß als organische Partikel natürlichen Ursprungs nahezu lauge- bzw. säurebeständige α-Zellstoffasern, die vorzugsweise chlor- oder wasserstoffperoxidgebleicht sowie naß und/oder trocken konditioniert sind, verwendet werden, die eine Faserlänge von bis zum 5000 »m sowie eine Faserdicke von etwa 0,1 »m bis 50 »m aufweisen.

8. Verfahren nach Anspruch 6 oder 7,
dadurch gekennzeichnet, daß als anorganische Partikel Fasern verwendet werden, beispielsweise Glasfasern, Kohlenstoff-, Aluminiumoxid- oder Metallfasern, vorzugsweise in Faserlängen bis 5000 »m und Faserdicken von etwa 0,1 bis 50 »m, oder feingemahlene Edelstahlteilchen in Form von Stäuben oder Partikeln beispielsweise von einer Dicke von 0,1 bis 0,5 »m.

9. Verfahren nach einem der Ansprüche 1 bis 8,
dadurch gekennzeichnet, daß hydrophile Thermoplastfibrillen mit einem Wassergehalt von bis zu 60 %, vorzugsweise zwischen 30 und 50 %, verwendet werden.

10. Verfahren nach Anspruch 9,
dadurch gekennzeichnet, daß die Mischung, die feuchte, hydrophile thermoplastische Fibrillen enthält, zwecks Verdampfung des Wasseranteils langsam bei ansteigenden Temperaturen erhitzt wird.

11. Verfahren nach Anspruch 9 oder 10,
dadurch gekennzeichnet, daß die Thermoplastfibrillen eine Faserlänge von etwa 0,05 bis 5 mm, vorzugsweise zwischen 1 bis 1,5 mm, haben.

12. Verfahren nach einem der Ansprüche 1 bis 11,
dadurch gekennzeichnet, daß bei einer vorangehenden Verfahrensstufe die Mischung während des Erhitzungsvorganges, beispielsweise durch Rühren oder mittels Wirbelbett, in einer inerten Atmosphäre gehalten wird, wobei die inerte Atmosphäre beispielsweise eine Stickstoffatmosphäre ist.

13. Verfahren nach einem der Ansprüche 1 bis 12,
dadurch gekennzeichnet, daß die Agglomerate eine Größe von 30 »m bis 200 »m, vorzugsweise von 60 bis 120 »m, aufweisen.

14. Verfahren nach einem der Ansprüche 1 bis 13,
bei dem in einer vorangehenden Verfahrensstufe die Mischung in einem Trockenturm oder einer Wirbelschicht mit einem Bindemittel, beispielsweise einem Melamin-Formaldehyd-Harz, einem Epichlorhydrin-Harz oder dgl. besprüht und die Partikel bei vorbestimmter Temperatur auskondensiert werden.

15. Verfahren nach einem der Ansprüche 1 bis 14,
bei dem das körnige Stabilisier- und/oder Filterhilfsmittel bei der Filtration als Anschwemmittel eingesetzt wird.

16. Verfahren nach einem der Ansprüche 1 bis 15,
bei dem das körnige Stabilisier- und/oder Filterhilfsmittel zur Kuchen- und/oder Tiefenfiltration eingesetzt wird, insbesondere zur Separation von partikulären und/oder kolloidalen Teilchen.

17. Verfahren nach einem der Ansprüche 1 bis 16,
bei dem das körnige Stabilisierungsmittel in einer Stabilisier- und Regenerationsanlage eingesetzt wird.

18. Verfahren nach einem der Ansprüche 1 bis 17,
dadurch gekennzeichnet, daß das Stabilisier- und/oder Filterhilfsmittel in einer Filtersäule unter Zudosierung zum Unfiltratstrom angeschwemmt wird, daß der angeschwemmte Filterkuchen in Säulenform regeneriert und anschließend in ein Dosiergefäß ausgetragen und zur Resuspension derart verwendet wird, daß die Körner erneut in einer Säule angeschwemmt werden, wobei mindestens zwei Filtersäulen derart kontinuierlich betrieben werden, daß in der einen Filtersäule gefiltert und/oder stabilisiert und in der anderen Filtersäule regeneriert wird (Fig. 1).

19. Verfahren nach Anspruch 18,
dadurch gekennzeichnet, daß die Stabilisierungs- und/oder Filterhilfsmittel in bis zu 100 Filtersäulen in der Weise vorgelegt werden, daß eine bestimmte Menge des Unfiltrats so lange durch eine Säule geleitet wird, bis diese Säule zu etwa 80 % ihres Adsorptionsvermögens erschöpft ist, und daß in dieser Weise kontinuierlich aufeinanderfolgend alle regenerierten Säulen zugeschaltet werden, während parallel hierzu die erschöpften Säulen ebenfalls kontinuierlich nacheinander regeneriert werden (Fig. 2).

20. Verfahren nach einem der Ansprüche 15 bis 19,
dadurch gekennzeichnet, daß der angeschwemmte Filterkuchen nach Beendigung der Filtration und Stabilisierung im Filter regeneriert und zur erneuten Filtration und Stabilisierung bereitgestellt wird (Fig. 2).

## Claims

1. Method for stabilizing and/or filtering drinks, in particular beer, juice, wine or the like, using a granular stabilizing and/or filtering aid, in which the grains consist of a mixture of different substances, whereof at least one is in the form of fine to superfine granular particles, the grain size of the stabilizing and/or filter aid being determined by sifting or crushing of a material in accordance with the application, which material was produced by compression, heating and agglomeration of the mixture and of a fusible material contained therein as well as by subsequent fixing in the manner of sintering.

2. Method according to Claim 1, characterized in that the mixture for producing the granular stabilizing agent for drinks contains organic granular particles of synthetic origin, for example polyvinylpolypyrrolidone (PVPP) and/or synthetic granulated materials, for example polyethylene granules and/or multified cellulose.

3. Method according to Claim 2, characterized in that the organic synthetic particles in the mixture have different grain fractions, preferably between 0.1 »m to approximately 10 »m and between 10 »m to 50 »m and/or greater than 50 »m.

4. Method according to one of Claims 1 to 3, in which, in a preceding step of the method, the particles are pre-compressed in a pressing worm preceding a compacting device, at temperatures in the vicinity of the melting point, for example of 140 to 260°C for a duration of 10 to 120 minutes and then are agglomerated and sintered at a predetermined sintering temperature of for example 160 to 170°C and with a residence time adapted thereto of preferably 0.1 to 5 minutes.

5. Method according to Claim 1, in which in a preceding step of the method, fine granular organic particles of natural origin, such as cellulose or starch particles, and/or particles of synthetic origin, for example fine-grained PVPP, with organic fibres of synthetic origin, for example polypropylene (PP) and/or polyethylene (PE) - synthetic pulp or high-density polyethylene (HDPE), high-density polypropylene (HDPP), halogenated polyethylenes, polyoxymethylene or polyamides, are mixed or homogenized in a mixing or homogenizing device so that superfine particles of the granular particles adhere to the moist surfaces of the fibres and then are fixed at temperatures in the vicinity of the melting point of the fusible material and after evaporation of the wetting water the fine particles are sintered together and then crushed to the desired grain sizes.

6. Method according to Claim 5, characterized in that in place of or mixed with the organic particles of synthetic origin, organic particles such as diatomaceous earths, perlite, highly calcined, alkali-proof and acid-proof oxides, for example alpha-aluminium oxide, zirconium dioxide, titanium dioxide and/or carbon particles, zeolites or the like are used.

7. Method according to Claim 5, characterized in that as organic particles of natural origin, virtually alkali-proof or acid-proof alpha-cellulose fibres, which are preferably bleached with chlorine or hydrogen peroxide as well as treated wet and/or dry, are used, which have a fibre length of up to 5000 »m as well as a fibre thickness of approximately 0.1 »m to 50 »m.

8. Method according to Claim 6 or 7, characterized in that as inorganic particles, fibres are used, for example glass fibres, carbon, aluminium oxide or metal fibres, preferably with fibre lengths of up to 5000 »m and fibre thicknesses of approximately 0.1 to 50 »m, or finely ground high-grade steel particles in the form of dust or particles for example with a thickness of 0.1 to 0.5 »m.

9. Method according to one of Claims 1 to 8, characterized in that hydrophilic thermoplastic fibrels with a water content of up to 60%, preferably of between 30 and 50%, are used.

10. Method according to Claim 9, characterized in that the mixture, which contains moist, hydrophilic thermoplastic fibrels, is heated slowly with increasing temperatures for the purpose of evaporating the water content.

11. Method according to Claim 9 or 10, characterized in that the thermoplastic fibrels have a fibre length of approximately 0.05 to 5 mm, preferably of between 1 to 1.5 mm.

12. Method according to one of Claims 1 to 11, characterized in that in a preceding step of the method, the mixture is kept in an inert atmosphere during the heating process, for example by stirring or by means of a fluidized bed, the inert atmosphere being for example a nitrogen atmosphere.

13. Method according to one of Claims 1 to 12, characterized in that the agglomerates have a size of 30 »m to 200 »m, preferably of 60 to 120 »m.

14. Method according to one of Claims 1 to 13, in which, in a preceding step of the method, the mixture is sprayed in a drying tower or a fluidized bed with a binding agent, for example a melamine-formaldehyde resin, an epichlorohydrin resin or the like and the particles are condensed out at a predetermined temperature.

15. Method according to one of Claims 1 to 14, in which the granular stabilizing and/or filter aid is used as a settling agent in the filtration.

16. Method according to one of Claims 1 to 15, in which the granular stabilizing and/or filtering aid is used for cake and/or depth filtration, in particular for the separation of particular and/or colloidal particles.

17. Method according to one of Claims 1 to 16, in which the granular stabilizing agent is used in a stabilizing and regenerating plant.

18. Method according to one of Claims 1 to 17, characterized in that the stabilizing and/or filtering aid is settled in a filtration column with dosing to the stream of unfiltered material, that the settled filter cake is regenerated in the form of a column and then discharged into a dosing vessel and is used for resuspension so that the grains are again settled in a column, at least two filter columns being operated continuously so that filtering and/or stabilization is carried out in one filter column and regenerating is carried out in the other filter column (Figure 1).

19. Method according to Claim 18, characterized in that the stabilizing and/or filtering aids are applied in up to 100 filter columns in such a way that a certain quantity of unfiltered material is guided for so long through a column until this column has up to approximately 80% of its adsorption capacity exhausted, and that in this way the columns which are all continuously regenerated in succession are put into the circuit, whereas parallel thereto, the exhausted columns are likewise continuously regenerated in succession (Figure 2).

20. Method according to one of Claims 15 to 19, characterized in that the settled filter cake is regenerated in the filter after completion of the filtration and stabilization and is prepared for further filtration and stabilization (Figure 2).

## Revendications

1. Procédé de stabilisation et/ou de filtration de boissons, en particulier, de bière, jus, vins, ou autres, en utilisant un adjuvant de filtration et/ou de stabilisation granuleux, procédé selon lequel les grains se composent d'un mélange de différentes substances, dont l'une au moins présente la forme de particules granuleuses fines à très fines, la grosseur de grains des adjuvants de stabilisation et/ou de filtration étant déterminée, suivant l'objectif d'utilisation, par triage ou broyage d'une masse, qui a été produite par compression, chauffage et agglomération du mélange et d'une substance fusible, contenue dans ce dernier, ainsi que par fixation ultérieure à la manière d'un frittage.

2. Procédé suivant la revendication 1, caractérisé en ce que le mélange, pour la préparation du stabilisant granuleux de boissons, comporte des particules granuleuses organiques d'origine synthétique, telles que polyvinylpolypyrrolidone (PVPP) et/ou granulats de matière plastique, granulat de polyéthylène, par exemple, et/ou cellulose modifiée.

3. Procédé suivant la revendication 2, caractérisé en ce que les particules organiques synthétiques présentent dans le mélange différentes fractions granulométriques, comprises de préférence entre 0,1 »m et 10 »m, entre 10 »m et 50 »m, et/ou supérieures à 50 »m.

4. Procédé suivant l'une quelconque des revendications 1 à 3, selon lequel, dans une phase de procédé précédente, les particules sont précomprimées dans une vis sans fin, montée en amont d'un appareil de compactage, à des températures avoisinant le point de fusion, de 140 à 260° C par exemple, pour une durée de 10 à 120 minutes, puis sont agglomérées et frittées à une température de frittage donnée, de 160 à 170° C par exemple, et avec une durée de séjour, adaptée à cette température, de 0,1 à 5 minutes de préférence.

5. Procédé suivant la revendication 1, selon lequel, dans une phase de procédé précédente, des particules organiques à grains fins d'origine naturelle, telles que particules de cellulose ou d'amidon, et/ou des particules d'origine synthétique, PVPP à grains fins par exemple, sont mélangées et/ou homogénéisées dans un dispositif de mélange ou d'homogénéisation avec des fibres organiques d'origine synthétique, telles que pulpe de synthèse de polypropylène (PP) et/ou de polyléthylène (PE), ou polyéthylène haute densité (HDPE), polypropylène haute densité (HDPP), polyéthylènes halogénés, polyoxyméthylène ou polyamides, de sorte que des particules très fines des particules granuleuses s'appliquent par adhésion sur les surfaces humides des fibres, puis sont fixées à des températures avoisinant le point de fusion de la substance fusible, les particules fines étant frittées après l'évaporation de l'eau de mouillage, puis broyées dans les grosseurs de grains voulues.

6. Procédé suivant la revendication 5, caractérisé en ce que, au lieu de particules organiques, ou de particules organiques en mélange avec les particules organiques d'origine synthétique, des particules telles que diatomites, perlites, oxydes fortement calcinés résistants aux acides et aux bases, alumine alpha, zircone, anhydride titanique, par exemple, et/ou particules de carbone, zéolites, ou autres, sont utilisées.

7. Procédé suivant la revendication 5, caractérisé par l'utilisation, en tant que particules organiques d'origine naturelle, de fibres de cellulose alpha quasiment résistantes aux bases et/ou acides, de préférence blanchies au chlore ou au peroxyde d'hydrogène, et conditionnées par voie humide et/ou sèche, ces fibres présentant une longueur de 5000 »m maximum et une épaisseur de l'ordre de 0,1 »m à 50 »m.

8. Procédé suivant l'une des revendications 6 ou 7, caractérisé en ce que les fibres utilisées, comme particules minérales, sont par exemple des fibres de verre, des fibres métalliques, de carbone, ou d'alumine, dans des longueurs préférentielles de 5000 »m maximum et des épaisseurs de l'ordre de 0,1 à 50 »m, ou des particules d'acier spécial finement broyées, en forme de poussières ou de particules, d'une épaisseur de 0,1 à 0,5 »m, par exemple.

9. Procédé suivant l'une quelconque des revendications 1 à 8, caractérisé par l'utilisation de fibrilles thermoplastiques hydrophiles d'une teneur en eau de 60% maximum, comprise entre 30 et 50% de préférence.

10. Procédé suivant la revendication 9, caractérisé en ce que le mélange, qui comporte des fibrilles thermoplastiques hydrophiles et humides, est chauffé lentement à des températures croissantes, en vue d'évaporer la part d'eau.

11. Procédé suivant l'une des revendications 9 ou 10, caractérisé en ce que les fibrilles thermoplastiques présentent une longueur de fibres de l'ordre de 0,05 à 5 mm, de 1 à 1,5 mm de préférence.

12. Procédé suivant l'une quelconque des revendications 1 à 11, caractérisé en ce que, dans une phase de procédé précédente, le mélange est maintenu pendant l'opération de chauffage, par agitation ou au moyen d'un lit fluidisé par exemple, sous une atmosphère de gaz inerte, l'atmosphère inerte étant une atmosphère d'azote, par exemple.

13. Procédé suivant l'une quelconque des revendications 1 à 12, caractérisé en ce que les agglomérats présentent une grosseur de 30 à 200 »m, de 60 à 120 »m de préférence.

14. Procédé suivant l'une quelconque des revendications 1 à 13, caractérisé en ce que, dans une phase de procédé précédente, le mélange est aspergé d'un liant, tel que résine mélamine-formaldéhyde, résine épichlorhydrine, ou autres, dans une tour de séchage ou dans un lit fluidisé, et les particules sont condensées à la température prédéfinie.

15. Procédé suivant l'une quelconque des revendications 1 à 14, selon lequel l'adjuvant de fitration et/ou de stabilisation granuleux est utilisé comme moyen de dépôt lors de la filtration.

16. Procédé suivant l'une quelconque des revendications 1 à 15, selon lequel l'adjuvant de filtration et/ou de stabilisation granuleux est utilisé pour la filtration du gâteau et/ou en profondeur, pour la séparation de particules corpusculaires et/ou colloïdales en particulier.

17. Procédé suivant l'une quelconque des revendications 1 à 16, selon lequel le stabilisant granuleux est utilisé dans une installation de stabilisation et de régénération.

18. Procédé suivant l'une quelconque des revendications 1 à 17, caractérisé en ce que l'adjuvant de filtration et/ou de stabilisation est déposé dans une colonne filtrante, avec une addition dosée au courant de non-filtrat, en ce que le gâteau de filtre déposé est régénéré en forme de colonne, puis déchargé dans un récipient de dosage et utilisé pour la resuspension, de sorte que les grains sont de nouveau déposés dans une colonne, deux colonnes filtrantes au moins étant exploitées en continu, de sorte que la filtration et/ou la stabilisation sont assurées dans l'une des colonnes, et la régénération dans l'autre colonne (figure 1).

19. Procédé suivant la revendication 18, caractérisé en ce que l'adjuvant de filtration et/ou de stabilisation est placé jusque dans 100 colonnes filtrantes, de manière qu'une quantité donnée du non-filtrat est envoyée au travers d'une colonne, jusqu'à ce que cette dernière soit épuisée à 80% environ de son pouvoir d'adsorption, et en ce que toutes les colonnes régénérées sont commutées de cette manière successivement et en continu, tandis que les colonnes épuisées sont également régénérées en continu, les unes après les autres, parallèlement à cette commutation (figure 2).

20. Procédé suivant l'une quelconque des revendications 15 à 19, caractérisé en ce que le gâteau de filtre déposé est régénéré dans le filtre à la fin de la filtration et de la stabilisation, et est mis à disposition pour une nouvelle filtration et stabilisation (figure 2).
